# EUROPÄISCHE PATENTSCHRIFT

(11) **EP 2 268 729 B1**
(45) Veröffentlichungstag und Bekanntmachung des Hinweises auf die Patenterteilung: **20.07.2011**
(21) Anmeldenummer: 09734048.3
(22) Anmeldetag: 26.03.2009
(51) Int. Cl.: C08K 9/02, C08K 9/06

(54) **PARTIKULÄRE WACHSKOMPOSITE MIT KERN/HÜLLE-STRUKTUR UND VERFAHREN ZU DEREN HERSTELLUNG SOWIE DEREN VERWENDUNG**
PARTICULATE WAX COMPOSITES HAVING A CORE/SHELL STRUCTURE AND METHOD FOR THE PRODUCTION THEREOF AND THE USE THEREOF
COMPOSITE DE CIRE PARTICULAIRE À STRUCTURE NOYAU/ENVELOPPE, PROCÉDÉ DE PRODUCTION ET UTILISATION DE CE COMPOSITE

(30) Priorität: 25.04.2008 DE 102008021005
(43) Veröffentlichungstag der Anmeldung: 05.01.2011
(73) Patentinhaber: BYK-Chemie GmbH, 46483 Wesel (DE)
(72) Erfinder: NOLTE, Ulrich, 47533 Kleve (DE); BERKEI, Michael, 45721 Haltern am See (DE); SAWITOWSKI, Thomas, 46485 Wesel (DE); WASCHILOWSKI, Nadine, 47807 Krefeld (DE)
(74) Vertreter: Strehlke, Ingo Kurt
(86) Internationale Anmeldenummer: PCT/EP2009/002215
(87) Internationale Veröffentlichungsnummer: WO 2009/129907

(56) Entgegenhaltungen:
- WO-A-2006/107552
- DE-A1- 1 620 782
- US-A1- 2006 204 881
- US-A1- 2007 009 823

## Beschreibung

Die vorliegende Erfindung betrifft partikuläre wachshaltige Kompositmaterialien ("Wachskomposite") und ein Verfahren zu deren Herstellung sowie deren Verwendung.

Insbesondere betrifft die vorliegende Erfindung anorganisch-organische Kompositpartikel mit Kern/Hülle-Struktur mit einem wachshaltigen Kern und einer diesen Kern umgebenden anorganischen Hülle bzw. Beschichtung und ein Verfahren zur Herstellung dieser Kompositpartikel sowie deren Verwendung.

Weiterhin betrifft die vorliegende Erfindung die Verwendung dieser Kompositpartikel, insbesondere in Beschichtungsstoffen und Beschichtungssystemen, wie insbesondere Lacken, Farben und dergleichen, in Dispersionen aller Art, in Kunststoffen, in Schaumstoffen, in Kosmetika, insbesondere Nagellacken, in Klebstoffen, in Dichtungsmassen etc.

Des weiteren betrifft die vorliegende Erfindung die Verwendung dieser Kompositpartikel als Füllstoffe bzw. Inhaltsstoffe, insbesondere in den vorgenannten Systemen.

Schließlich betrifft die vorliegende Erfindung gleichermaßen Systeme, insbesondere Beschichtungsstoffe und Beschichtungssysteme, wie insbesondere Lacke, Farben und dergleichen, Kunststoffe, Schaumstoffe und Kosmetika, wie insbesondere Nagellacke, welche diese Kompositpartikel enthalten.

Außerdem sind Gegenstand der vorliegenden Erfindung auch neuartige Dispersionen, welche diese Kompositpartikel in einem Träger- oder Dispergiermedium enthalten.

Zur Verbesserung der mechanischen Eigenschaften von Beschichtungs- und Dispersionssystemen (so z. B. von Lacken, Farben wie Druckfarben, Beschichtungen) und von Kunststoffen, insbesondere speziell zur Steigerung deren Verschleißeigenschaften, wie Kratzfestigkeit und Abriebfestigkeit, ist die Inkorporierung von Additiven und Füllstoffen, wie beispielsweise von Wachsen oder anorganischen Füllstoffpartikeln (z. B. von sogenannten Nanopartikeln) dem Fachmann grundsätzlich bekannt.

Die aus dem Stand der Technik bekannten anorganischen Füllstoffpartikel verbessern zwar unter Umständen die Kratzfestigkeit der Beschichtungssysteme (z. B. von Lacken), in denen sie eingesetzt werden; jedoch kann es nach dem Auftrag zu einer erhöhten Sprödigkeit des resultierenden Beschichtungsfilms (z. B. eines Lackfilms) kommen. Auch führt die Inkorporierung dieser Füllstoffpartikel oftmals zu einer unerwünschten Eintrübung und mangelnden Transparenz des Beschichtungssystems. Auch sind häufig relativ hohe Füllstoffgehalte erforderlich, um die gewünschten Effekte zu erreichen, was eine Stabilisierung der resultierenden Dispersionssysteme erschwert und auch aus Kostengründen unerwünscht ist.

Die JP 07138484 A betrifft die Herstellung von Extrudaten aus einem Gemisch aus Wachs, Ölen oder Harzen und einem pulverförmigen anorganischen Material, wie z. B. Talkum oder Silika. Die inkorporierten zusätzlichen Komponenten sollen bei dem Extrusionsvorgang dem Wachs unter anderem eine verbesserte Fließfähigkeit bewirken.

Die JP 06166756 A betrifft Emulsionen feinteiliger Wachspartikel mit Teilchendurchmessern von 0,1 bis 100 µm in einer inerten Flüssigkeit, vorzugsweise einem Fluorkohlenwasserstoff, wie Perfluorpentan, unter Verwendung von hydrophobem Silika als Emulgator in Mengen von 1 bis 20 Gewichtsteilen bezogen auf 100 Gewichtsteile Wachs. Das hydrophobierte Silika, welches lediglich als Emulgator zum Einsatz kommt, wird durch Reaktion der Oberfläche von hydrophilem Silika mit einem Hydrophobierungsmittel, insbesondere halogeniertem Alkylsilan oder Alkoxysilan, erhalten.

Die JP 2004-339515 A betrifft die Herstellung von gefälltem Silika mit oberflächenmodifizierten Eigenschaften, wobei das auf diese Weise hergestellte Silika als Mattierungsmittel in Lacken eingesetzt werden soll. Die Oberflächenmodifizierung erfolgt durch Behandlung der Silikaoberfläche mit einem Polyethylenwachs, so daß wachsbeschichtete Silikapartikel resultieren. Die KR 10-2004-0098585 A betrifft gefälltes Silika, dessen Oberfläche mit einem Polyorganosiloxanpolymer beschichtet ist, sowie ein Verfahren zu dessen Herstellung. Das oberflächenmodifizierte Silika soll als Mattierungsmittel für transparente Beschichtungsmaterialien Verwendung finden.

Weiterhin betrifft die KR 10-2005-0094496 A ein Herstellungsverfahren für ein Kern/Hülle-Polymerlatex, um den Ankopplungsgrad zwischen Wachspartikeln und Latexpartikeln zu verbessern und auf diese Weise den Herstellungsprozeß zu vereinfachen, indem vorangehend keine Wachsemulsion hergestellt werden zu braucht. Die auf diese Weise hergestellten Zubereitungen sollen als Tonerzusammensetzungen für elektrophotographische Bildgeräte, insbesondere Kopiergeräte, dienen.

Die WO 95/31508 A1 betrifft wachsbeschichtete Silikapartikel, welche als Mattierungsmittel Verwendung finden sollen.

Weiterhin betrifft die EP 1 182 233 B1 ein Verfahren zur Belegung von Kieselsäuren mit Wachsen, wobei die dort beschriebenen Kieselsäuren als Mattierungsmittel in Lacken Verwendung finden sollen.

Die EP 1 204 701 B1 betrifft eine gehärtete Beschichtung auf einem Substrat mit einem Konzentrationsgradienten der in der Beschichtung enthaltenen Füllstoffteilchen dahingehend, daß innerhalb oberflächennaher Regionen der Beschichtung die Konzentration der inkorporierten Füllstoffteilchen größer ist als die Konzentration dieser Teilchen innerhalb der darunterliegenden Beschichtungsbereiche. Hierdurch wird aber infolge Inhomogenität der Beschichtung eine nur bereichsweise Verbesserung ausschließlich im Bereich der Oberfläche erreicht.

Die US 2006/0228642 A1 betrifft ein Verfahren zur Herstellung von Polymerlatexpartikeln mit Kern/Hülle-struktur mit einem inneren Wachskern und einer äußeren Latexhülle, wobei derartige Partikel insbesondere für Tonerzusammensetzungen verwendbar sein sollen.

Wachshaltige Kompositpartikel zur Verbesserung der mechanischen Eigenschaften von Beschichtungssystemen, insbesondere zur Erhöhung der Verschleißbeständigkeit, sind im Stand der Technik bislang noch nicht vorgeschlagen worden.

Die WO 2006/107552 A2 betrifft granulatförmige feste Wachspartikel, welche ein hochgradig paraffinhaltiges Wachs mit einem T10-Siedepunkt von unter 427 °C und eine anorganische Pulverbeschichtung aufweisen, sowie ein Verfahren zum Transport der Wachspartikel und ein Verfahren, um ein Basisöl aus den Wachspartikeln herzustellen.

Die DE 1 620 782 A betrifft rieselfähige Lichtschutzwachse, die insbesondere als Beimischung zu Kautschuk geeignet sind, wobei die Wachspartikel mit staubförmigem Füllmittel, welches Mischungsbestandteil der Vulkanisate ist, umhüllt sind.

Die US 2007/0009823 A1 wiederum betrifft eine Tonerzusammensetzung, welche Tonerpartikel mit mindestens einem Harz, einem Wachs und einem farbgebenden Mittel sowie weitere Additive, welche auf die Oberfläche der Tonerpartikel aufgebracht werden, umfasst. Bei den weiteren Additiven kann es sich unter anderem um Silikat, Titandioxid und partikelförmige Abstandshalter handeln.

Die US 2006/0204881 A1 betrifft einen elektrofotografischen Toner, welcher Tonerpartikel und ein äußerlich auf die Tonerpartikel aufgebrachtes, feines anorganisches Pulver umfasst. Die Tonerpartikel wiederum besitzen einen mehrschichtigen Aufbau, wobei eine den wachshaltigen Kern der Tonerpartikel umgebende Schicht ein Einsinken der Partikel des anorganischen Pulvers in das Wachs verhindern soll, während die außen liegende Schicht der Tonerpartikel ein Haften des anorganischen Pulvers an den Tonerpartikeln bewirken soll.

Der vorliegenden Erfindung liegt daher die Aufgabe zugrunde, Füllstoffpartikel der vorgenannten Art bereitzustellen, welche sich insbesondere zum Einsatz in den vorgenannten Systemen eignen und die mit den herkömmlichen Partikeln verbundenen Nachteile zumindest weitgehend vermeiden oder aber wenigstens abschwächen, sowie ein entsprechendes Herstellungsverfahren für derartige Partikel anzugeben.

Eine weitere Aufgabe der vorliegenden Erfindung ist darin zu sehen, neuartige Füllstoffpartikel der eingangs genannten Art bereitzustellen, welche bei ihrer Inkorporierung in die eingangs genannten Systeme eine effiziente Leistungssteigerung bewirken und sich insbesondere zur Verbesserung der mechanischen Eigenschaften von Beschichtungs- und Dispersionssystemen (so z. B. von Lacken, Farben wie Druckfarben, Beschichtungen etc.) und von Kunststoffen, insbesondere speziell zur Steigerung von deren Verschleißeigenschaften, insbesondere der Kratzfestigkeit und Abriebfestigkeit, eignen.

Zur Lösung des zuvor geschilderten Problems schlägt die vorliegende Erfindung somit anorganisch-organische Kompositpartikel mit Kern/Hülle-Struktur nach Patentanspruch 1 vor; weitere, vorteilhafte Ausgestaltungen sind Gegenstand der betreffenden Unteransprüche.

Weiterer Gegenstand der vorliegenden Erfindung ist ein Verfahren zur Herstellung der erfindungsgemäßen Kompositpartikel, wie es in den Patentansprüchen 10 und 11 wiedergegeben ist.

Wiederum ein weiterer Gegenstand der vorliegenden Erfindung ist die erfindungsgemäße Verwendung der Kompositpartikel nach der vorliegenden Erfindung, wie sie in den betreffenden Verwendungsansprüchen wiedergegeben ist (Patentansprüche 12 und 13).

Wiederum ein weiterer Gegenstand der vorliegenden Erfindung sind Dispersionen, welche die erfindungsgemäßen Kompositpartikel in einem Träger- oder Dispergemedium enthalten (Patentanspruch 14).

Schließlich sind ein weiterer Gegenstand der Erfindung Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die erfindungsgemäßen Kompositpartikel enthalten (Patentanspruch 15).

Es versteht sich von selbst, daß im nachfolgenden solche Ausführungen, welche nur zu einem einzelnen Aspekt der vorliegenden Erfindung gemacht sind, gleichermaßen entsprechend auch für die anderen Aspekte der vorliegenden Erfindung gelten, ohne daß dies einer ausdrücklichen Erwähnung bedarf.

Gegenstand der vorliegenden Erfindung - gemäß einem **ersten** Aspekt der vorliegenden Erfindung - sind somit anorganisch-organische Kompositpartikel mit Kern/Hülle-Struktur, wobei die Kompositpartikel einen organisch basierten Kern, welcher mindestens ein Wachs enthält, und eine diesen Kern umgebende anorganisch basierte Hülle aufweisen. Dabei ist es im Rahmen der vorliegenden Erfindung vorgesehen, daß das Wachs funktionelle Gruppen, welche mit dem anorganischen Material der Hülle durch Ausbildung physikalischer und/oder chemischer Bindungen in Wechselwirkung zu treten imstande sind, enthält, wobei die funktionellen Gruppen polare Gruppen sind, welche Heteroatome aus der Gruppe von O, N und/oder S enthalten.

Eine Besonderheit der vorliegenden Erfindung ist zunächst darin zu sehen, daß anorganisch-organische Hybridpartikel bzw. Kompositpartikel mit Kern/Hülle-Struktur aus innerem Wachskern und äußerer anorganischer Hülle bereitgestellt werden. Derartige Kompositpartikel sind bislang noch nicht bereitgestellt worden. Diese Partikel vereinen die positiven Eigenschaften der Wachse einerseits und des betreffenden anorganischen Hüllmaterials andererseits in einer einzigen Struktur bzw. in einem einzigen Partikel und führen bei ihrer Inkorporierung als Püllstoffpartikel in Beschichtungsstoffe und Beschichtungssysteme der vorgenannten Art zu einer signifikanten Verbesserung der mechanischen Eigenschaften, insbesondere zu einer Steigerung der Verschleißbeständigkeit, insbesondere der Kratzfestigkeit und/oder der Abriebfestigkeit.

Im Vergleich zu herkömmlichen, rein mineralischen bzw. anorganischen Füllstoffpartikeln in Masse werden gewichtsbezogen zur Erreichung derselben Leistungseigenschaften infolge des geringeren spezifischen Eigengewichts deutlich geringere Mengen der erfindungsgemäßen Kompositpartikel benötigt. Zudem lassen sich die erfindungsgemäßen Kompositpartikel homogen und stabil in die vorgenannten Systeme einarbeiten. Ihre Inkorporierung in die vorgenannten Systeme, insbesondere in Beschichtungsstoffe und Beschichtungssysteme, wie Lacke, Farben und dergleichen, führt infolge des vergleichsweise niedrigen Brechungsindexes zu vergleichsweise geringer Eintrübung der betreffenden Systeme.

Was die erfindungsgemäßen Kompositpartikel anbelangt, so weisen diese Kompositpartikel im allgemeinen Teilchengrößen von 1 bis 1.000 nm, insbesondere 5 bis 800 nm, vorzugsweise 10 bis 700 nm, weiter bevorzugt 20 bis 600 nm, besonders bevorzugt 50 bis 500 nm, auf. Die Bestimmung der Teilchengröße kann beispielsweise mittels Transmissionselektronenmikroskopie, analytischer Ultrazentrifugation oder dynamischer Lichtstreuung erfolgen.

Dabei kann der Wachs enthaltende Kern der erfindungsgemäßen Kompostpartikel eine Größe im Bereich von 1 bis 400 nm, insbesondere 5 bis 300 nm, bevorzugt 10 bis 200 nm, aufweisen.

Es versteht sich von selbst, daß bei allen im Rahmen der vorliegenden Erfindung angegebenen Größen- und Bereichsangaben es einzelfallbedingt oder anwendungsbezogen erforderlich sein kann, hiervon abzuweichen, ohne daß der Rahmen der vorliegenden Erfindung verlassen ist.

Was den Anteil an die Hülle bildendem anorganischen Material anbelangt, so kann dieser Anteil in weiten Bereichen variieren: Im allgemeinen beträgt der Anteil an die Hülle bildendem anorganischem Material, bezogen auf die Kompositpartikel, 0,5 bis 80 Gew.-%, insbesondere 5 bis 75 Gew.-%, vorzugsweise 10 bis 70 Gew.-%. Der Anteil an den Kern bildendem organischem Material, insbesondere Wachs, dagegen beträgt, bezogen auf die Kompositpartikel, im allgemeinen 99,5 bis 20 Gew.-%, insbesondere 95 bis 25 Gew.-%, vorzugsweise 90 bis 30 Gew.-%.

Was die Hülle der erfindungsgemäßen Kompositpartikel anbelangt, so kann diese Hülle aus mindestens einem gegebenenfalls dotierten anorganischen Oxid (z. B. TiO₂, ZnO, Al₂O₃, SiO₂ ,CeO₂, Fe₂O₃, Fe₃O₄ etc.), Hydroxid (z. B. Al[OH]₃ etc.), Oxidhydroxid (z. B. AlOOH etc.), Vanadat (z. B. BiVO₄ oder YVO₄:Bi³⁺, Eu³⁺), Wolframat (z. B. CaWO₄), Apatit, Titanat, Fluorid (z. B. YbF₃ oder CaF₂:Eu²⁺), Zeolith, Sulfat (z. B. Erdalkalisulfate, wie Bariumsulfat, Calciumsulfat etc.), Phosphat (z. B. Erdalkaliphosphat, wie Calciumphosphat, oder Lanthanphosphat etc.), Sulfid (z. B. Cadmiumsulfid, Zinksulfid etc.), Carbonat (z. B. Erdalkalicarbonat, wie Magnesiumcarbonat oder Calciumcarbonat etc.), Silikat (z. B. Erdalkalisilikat, wie Calciumsilikat etc.), und/oder Metall (z. B. Silber) oder aber aus Mischungen oder Kombinationen solcher Verbindungen gebildet sein oder diese Verbindung(en) enthalten. Vorteilhafterweise ist das vorgenannte Hüllmaterial aus der Gruppe von anorganischen Oxiden, Hydroxiden, Oxidhydroxiden, Sulfaten, Vanadaten, Fluoriden, Wolframaten, Phosphaten, Sulfiden, Carbonaten, Silikaten, und/oder Metallen in dem betreffenden Medium schwerlöslich ausgebildet.

Insbesondere kann die Hülle aus mindestens einem Oxid, Hydroxid, Oxidhydroxid, Sulfat, Phosphat, Sulfid, Carbonat, Silikat, mindestens eines Metalls oder Halbmetalls oder aber aus Metallen oder aber aus Mischungen oder Kombinationen solcher Verbindungen gebildet sein oder diese Verbindung(en) enthalten.

Vorzugsweise kann die Hülle der erfmdungsgemäßen Kompositpartikel aus mindestens einem Oxid, Hydroxid und/oder Oxidhydroxid des Aluminiums, Siliziums, Zinks, Titans, Cers und/oder Eisens, einem Erdalkalisulfat, einem Erdalkali- oder Lanthanphosphat, einem Cadmium- oder Zinksulfid, einem Erdalkalicarbonat, einem Erdalkalisilkat oder Silber oder aber aus Mischungen oder Kombinationen solcher Verbindungen gebildet sein oder diese Verbindung(en) enthalten.

Besonders bevorzugt für die Ausbildung der Hülle der erfindungsgemäßen Kompositpartikel sind die folgenden Verbindungen: TiO₂, ZnO, Al₂O₃, SiO₂, CeO₂, Fe₂O₃, Fe₃O₄, Al(OH)₃, Al(O)OH, Erdalkalisulfate (z. B. Bariumsulfat, Calciumsulfat etc.), Erdalkaliphosphate (z. B. Calciumphosphat), Lanthanphosphat, Cadmiumsulfid, Zinksulfid, Erdalkalicarbonat (z. B. Magnesiumcarbonat, Calciumcarbonat etc.), Erdalkalisilikate (z. B. Calciumsilikat etc.) und/oder Silber sowie Mischungen oder Kombinationen solcher Verbindungen.

Ganz besonders bevorzugt ist es, wenn die Hülle aus Aluminiumoxid, Siliziumdioxid, Ceroxid, Zinkoxid und/oder Titandioxid, bevorzugt Siliziumdioxid, Zinkoxid und/oder Titandioxid, besonders bevorzugt Siliziumdioxid, gebildet ist oder diese Verbindung(en) enthält.

Noch weiter bevorzugt ist es, wenn die Hülle aus Siliziumdioxid gebildet ist (z. B. in Form von insbesondere hochdispersem SiO₂ bzw. Polykieselsäuren).

Vorteilhafterweise ist die Hülle zumindest im wesentlichen homogen bzw. mit zumindest im wesentlichen gleichmäßiger Schichtdicke auf den Kern aufgebracht, insbesondere als Präzipitat (d. h. als Fällungsprodukt im Rahmen der Herstellung).

Was den Kern der erfindungsgemäßen Kompositpartikel anbelangt, so ist dieser Kern aus mindestens einem Wachs gebildet bzw. enthält ein solches Wachs. Dabei kann das Wachs insbesondere ausgewählt sein aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen.

Was den Begriff des Wachses anbelangt, so handelt es sich hierbei um eine phänomenologische Bezeichnung für eine Reihe natürlich oder künstlich bzw. synthetisch gewonnener Stoffe, welche in der Regel folgende Eigenschaften aufweisen: Wachse sind bei 20 °C knetbar, fest bis brüchig-hart, grob bis feinkristallin, durchscheinend bis opak, jedoch nicht glasartig, über 40 °C ohne Zersetzung schmelzend, jedoch schon wenig oberhalb des Schmelzpunktes verhältnismäßig niedrigviskos und im allgemeinen bzw. vorteilhafterweise nicht fadenziehend, weisen eine stark temperaturabhängige Konsistenz und Löslichkeit auf und sind unter leichtem Druck polierbar. Ist mehr als eine der zuvor aufgeführten Eigenschaften nicht erfüllt, ist dieser Stoff nach der DGF (Deutsche Gesellschaft für Fettwissenschaften) kein Wachs (vgl. DGF-Einheitsmethode M-I 1 (75)).

Wachse unterscheiden sich von ähnlichen synthetischen oder natürlichen Produkten (z. B. Harzen, plastischen Massen, Metallseifen etc.) hauptsächlich darin, daß sie im allgemeinen etwa zwischen 50 und 90 °C, in Ausnahmefällen auch bis etwa 200 °C, in den schmelzflüssigen, niedrigviskosen Zustand übergehen und praktisch frei von aschebildenden Verbindungen sind.

Wachse bilden Pasten oder Gele und brennen in der Regel mit rußender Flamme.

Nach ihrer Herkunft unterteilt man die Wachse in drei Gruppen ein, nämlich (i) natürliche Wachse, hierunter pflanzliche Wachse (z. B. Candelillawachs, Carnaubawachs, Japanwachs, Espartograswachs, Korkwachs, Guarumawachs, Reiskeimölwachs, Zuckerrohrwachs, Ouricurywachs, Montanwachs etc.), tierische Wachse (z. B. Bienenwachs, Schellackwachs, Walrat, Lanolin bzw. Wollwachs, Bürzelfett etc.) und Mineralwachse (z. B. Ceresin, Ozokerit bzw. Erdwachs etc.); (ii) chemisch modifizierte Wachse, hierunter Hartwachse (z. B. Montanesterwachse, Sasolwachse, hydrierte Jojobawachse etc.); sowie (iii) synthetische Wachse, hierunter Polyalkylenwachse, Polyalkylenglykolwachse (z. B. Polyethylenglykolwachse) etc.

Hauptbestandteil natürlicher rezenter ("nachwachsender") Wachse sind Ester langkettiger Fettsäuren (Wachssäuren) mit langkettigen Fettalkoholen, Triterpen- oder Steroidalkoholen; diese Wachsester enthalten auch freie Carboxyl- und/oder Hydroxylgruppen, welche das Emulgiervermögen der sogenannten Wachsseifen bewirken. Natürliche fossile Wachse, z. B. aus Braunkohle oder Erdöl, bestehen - ebenso wie Wachse aus der Fischer-Tropsch-Synthese oder Polyalkylenwachse (z. B. Polyethylenwachse) - hauptsächlich aus geradkettigen Kohlenwasserstoffen; erstere können aber je nach Provenienz auch verzweigte oder cycloaliphatische Kohlenwasserstoffe enthalten. Häufig werden diese "Kohlenwasserstoff"-Wachse durch nachträgliche Oxidation oder im Fall der Polyolefinwachse auch durch Comonomere mit Carboxylgruppen funktionalisiert.

Zu weitergehenden Einzelheiten zum Begriff der Wachse kann beispielsweise verwiesen werden auf Römpp Chemielexikon, 10. Auflage, Band 6, 1999, Georg Thieme Verlag Stuttgart/New York, Seite 4906, Stichwort: "Wachse" sowie die dort referierte Literatur, insbesondere Cosm. Toil. 101, 49 (1986) sowie DGF-Einheitsmethoden, Abteilung M-Wachse und Wachsprodukte, 7. Ergänzungslieferung 05/1999, Stuttgart: Wissenschaftliche Verlagsgesellschaft

Erfindungsgemäß enthält das Wachs funktionelle Gruppen, welche mit dem anorganischen Material der Hülle durch Ausbildung physikalischer und/oder chemischer Bindungen in Wechselwirkung zu treten imstande sind.

Erfindungsgemäß handelt es sich bei den funktionellen Gruppen um polare Gruppen, welche Heteroatome aus der Gruppe von O, N und/oder S, bevorzugt O, enthalten, vorzugsweise Hydroxylgruppen, Polyethergruppen, insbesondere Polyalkylenoxidgruppen, und/oder Carboxylgruppen, besonders bevorzugt Polyethergruppen und/oder Hydroxylgruppen. Die funktionellen Gruppen des den Kern der Kompositpartikel bildenden Wachses bewirken bzw. steigern die Affinität des Wachsmaterials in bezug auf das anorganische Hüllmaterial und ermöglichen auf diese Weise eine insbesondere homogene bzw. gleichmäßige Beschichtung des Wachskerns mit dem Hüllmaterial.

Was den organisch basierten Kern der erfindungsgemäßen Kompositpartikel anbelangt, so kann dieser Kern im allgemeinen entweder einheitlich bzw. einkernig ausgebildet sein (d. h. sozusagen aus einem einzigen, homogenen Partikel bestehen) oder aber auch aus mehreren Partikeln zusammengesetzt sein bzw. sozusagen mehrkernig zusammengesetzt sein.

Gemäß einer besonderen Ausführungsform kann es vorgesehen sein, daß die anorganisch basierte Hülle der erfindungsgemäßen anorganisch-organischen Kompositpartikel oberflächenmodifiziert ausgebildet ist, wobei eine derartige Oberflächenmodifizierung vorteilhafterweise mittels Polysiloxangruppen erfolgt, d. h. an bzw. auf der Oberfläche der Hülle der erfindungsgemäßen Kompositpartikel sind Polysiloxangruppen aufgebracht, vorzugsweise mittels physikalischer und/oder chemischer, insbesondere chemischer kovalenter Bindung.

Die entsprechende Oberflächenmodifizierung mittels Polysiloxangruppen bewirkt eine noch weitergehende Steigerung bzw. Verbesserung der Anwendungseigenschaften der erfindungsgemäßen Kompositpartikel, insbesondere wenn sie als Füllstoffe in Beschichtungsstoffe und Beschichtungssysteme eingearbeitet werden. Insbesondere führt die Oberflächenmodifizierung, vorzugsweise mit Polysiloxangruppen, zu einer verringerten Sedimentations- und Gelbildungsneigung von Dispersionen, welche die erfindungsgemäßen Kompositpartikel erhalten. Auch wird einer Versprödung des abgetrockneten bzw. ausgehärteten Beschichtungssystems effizient entgegengewirkt.

Die Oberflächenmodifizierung hat weiterhin den Vorteil, daß bei Einarbeitung der erfindungsgemäßen Kompositpartikel als Füllstoffteilchen in Dispersionssysteme die Wechselwirkung mit dem Bindemittel vorteilhaft beeinflußt wird und auf diese Weise Transparenz und Brechungsindex gegenüber nicht oberflächenmodifizierten Partikeln noch weiter verbessert werden, insbesondere infolge des verringerten Brechungsindexunterschiedes eine deutlich geringere Lichtstreuung eintritt.

Die Oberflächenmodifizierung, insbesondere mittels Polysiloxangruppen, ist dem Fachmann grundsätzlich aus dem Stand der Technik bekannt. Diesbezüglich kann auf die auf die Anmelderin selbst zurückgehenden Patentanmeldungen DE 10 2005 006 870 A1 bzw. EP 1 690 902 A2 und DE 10 2007 030 285 A1 bzw. PCT/EP 2007/006273 verwiesen werden, deren gesamter Offenbarungsgehalt hiermit durch Bezugnahme eingeschlossen ist. Alle vorgenannten Druckschriften betreffen die Oberflächenmodifizierung von metall- oder halbmetalloxidischen oder hydroxidischen Oberflächen mittels Polysiloxanen, vorteilhafterweise durch Ausbildung chemischer, insbesondere kovalenter Bindungen.

Weiterer Gegenstand der vorliegenden Erfindung - gemäß einem **zweiten** Aspekt der vorliegenden Erfindung - ist ein Verfahren zur Herstellung von anorganisch-organischen Kompositpartikel mit Kern/Hülle-Struktur, wie zuvor beschrieben, wobei organisch basierte Teilchen, welche mindestens ein Wachs enthalten oder hieraus bestehen, mit einer anorganisch basierten Hülle beschichtet werden, so daß die organisch basierten Wachsteilchen von der anorganisch basierten Hülle umgeben werden, wobei als den Kern bildendes Wachs ein Wachs eingesetzt wird, welches funktionelle Gruppen, die mit dem anorganischen Material der Hülle durch Ausbildung physikalischer und/oder chemischer Bindungen in Wechselwirkung zu treten imstande sind, enthält, wobei die funktionellen Gruppen polare Gruppen sind, welche Heteroatome aus der Gruppe von O, N und/oder S enthalten.

Wie zuvor beschrieben, werden die Wachs enthaltenden oder hieraus bestehenden Ausgangsteilchen mit einer Teilchengröße im Bereich von 1 bis 400 nm, insbesondere 5 bis 300 nm, bevorzugt 10 bis 200 nm, eingesetzt und resultieren nach der Beschichtung mit dem anorganisch basierten Material der Hülle Kompositpartikel nach der vorliegenden Erfindung mit Partikelgrößen im Bereich von 1 bis 1.000 nm, insbesondere 5 bis 800 nm, vorzugsweise 10 bis 700 nm, weiter bevorzugt 20 bis 600 nm, besonders bevorzugt 50 bis 500 nm.

Wie zuvor beschrieben, ist es üblich, wenn das die Hülle bildende anorganische Material, bezogen auf die resultierenden Kompositpartikel, in Mengen von 0,5 bis 80 Gew.-%, insbesondere 5 bis 75 Gew.-%, vorzugsweise 10 bis 70 Gew.-%, eingesetzt wird und/oder das den Kern bildende organische Material, insbesondere Wachs, bezogen auf die resultierenden Kompositpartikel, in Mengen von 99,5 bis 20 Gew.-%, insbesondere 95 bis 25 Gew.-%, vorzugsweise 90 bis 30 Gew.-%, eingesetzt wird.

Bezüglich des anorganischen Hüllmaterials kann zur Vermeidung unnötiger Wiederholungen auf die vorstehenden Ausführungen zu den erfindungsgemäßen Kompositpartikeln verwiesen werden, welche in bezug auf das erfindungsgemäße Verfahren in gleicher Weise gelten.

Was das eingesetzte Wachs anbelangt, so kann diesbezüglich zur Vermeidung unnötiger Wiederholungen auf die vorstehenden Ausführungen zu den erfindungsgemäßen Kompositpartikeln verwiesen werden, welche in bezug auf das erfindungsgemäße Herstellungsverfahren entsprechend gelten.

Im Rahmen des erfindungsgemäßen Herstellungsverfahrens wird die Hülle zumindest im wesentlichen homogen und/oder mit zumindest im wesentlichen gleichmäßiger Schichtdicke auf den Kern aufgebracht, was insbesondere mit Fällungsreaktionen realisiert werden kann. Dies wird nachfolgend noch im Detail erläutert.

Üblicherweise wird im Rahmen des erfindungsgemäßen Herstellungsverfahrens wie folgt vorgegangen: Zunächst wird eine Dispersion von Wachsteilchen bereitgestellt, und nachfolgend werden die Wachsteilchen mit dem anorganisch basierten Hüllmaterial beschichtet, wobei das anorganisch basierte Hüllmaterial insbesondere mittels Fällungsreaktion auf den Wachsteilchen abgeschieden wird

Dabei ist es besonders vorteilhaft, wenn ein entsprechender Vorläufer des anorganisch basierten Hüllmaterials eingesetzt wird, welcher dann unter Reaktionsbedingungen in situ (z. B. unter Hydrolyse) das anorganische Hüllmaterial ausbildet und auf den wachshaltigen Kernen abgeschieden wird, insbesondere auf den wachshaltigen Kernen abgeschieden wird.

Erfindungsgemäß besonders bevorzugt ist es also, wenn das anorganisch basierte Hüllmaterial in situ, insbesondere im Rahmen der Fällungsreaktion gebildet wird. Beispielsweise kann das anorganisch basierte Hüllmaterial in situ, insbesondere im Rahmen der Fällungsreaktion, aus mindestens einem Kieselsäureester gebildet werden. Erfindungsgemäß kommen als Kieselsäureester beispielsweise monomere, oligomere oder polymere organische Kieselsäureester, insbesondere von C₁-C₁₀-Alkoholen, besonders bevorzugt Alkoxysilane mit mindestens zwei funktionellen Gruppen, in Betracht, welche nachfolgend in situ hydrolysiert und/oder mit den polaren Gruppen der Wachsteilchen umgesetzt bzw. zur Reaktion gebracht werden und auf diese Weise als Polykieselsäure bzw. Siliziumdioxid auf den Wachsteilchen als diese Wachsteilchen umgebende Hülle abgeschieden werden. Dem kann sich dann eine Oberflächenmodifizierung, insbesondere mittels Polysiloxangruppen, insbesondere in der zuvor beschriebenen Art und Weise, anschließen. Ebenfalls kann sich eine Abtrennung bzw. Isolierung der auf diese Weise erhaltenen Teilchen bzw. Kompositpartikel anschließen.

Aus den vorgenannten Gründen ist es erfindungsgemäß besonders bevorzugt, wenn die anorganisch basierte Hülle der erfindungsgemäßen Kompositpartikel einer Oberflächenmodifizierung unterzogen wird, insbesondere durch Aufbringung von Polysiloxangruppen. Für weitergehende diesbezügliche Einzelheiten kann auf die vorstehenden Ausführungen verwiesen werden.

Im Rahmen der vorliegenden Erfindung können insbesondere mikronisierte Wachse als Kernmaterial verwendet werden, welche mit anorganischen Hüllen zur Herstellung der erfindungsgemäßen Kompositpartikeln belegt werden. Als Hülle- bzw. Schalenmaterial ist zwar SiO₂ bevorzugt, jedoch ist die vorliegende Erfindung hierauf nicht beschränkt. Wie zuvor beschrieben, können die Oberflächen der erfindungsgemäßen Kompositpartikel oberflächenmodifiziert bzw. funktionalisiert werden, insbesondere mittels Polysiloxanen, wie dies zuvor beschrieben worden ist.

Weiterer Gegenstand der vorliegenden Erfindung - gemäß einem **dritten** Aspekt der vorliegenden Erfindung - ist die Verwendung der erfindungsgemäßen Kompositpartikel als Füllstoffe. Insbesondere lassen sich die erfindungsgemäßen Kompositpartikel in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen sowie in Dichtungsmassen einsetzen, insbesondere dort in ihrer Eigenschaft als Füllstoffe bzw. Inhaltsstoffe bzw. Additive.

Insbesondere können die erfindungsgemäßen Kompositpartikel dazu eingesetzt werden, zur Verbesserung der mechanischen Eigenschaften, insbesondere zur Steigerung der Verschleißbeständigkeit, vorzugsweise der Kratzfestigkeit und/oder Abriebfestigkeit, in den vorgenannten Systemen beizutragen.

Weiterer Gegenstand der vorliegenden Erfindung - gemäß einem **vierten** Aspekt der vorliegenden Erfindung - sind Dispersionen, welche die erfindungsgemäßen Kompositpartikel in einem Träger- oder Dispergiermedium enthalten.

Schließlich sind weiterer Gegenstand der vorliegenden Erfindung - gemäß einem **fünften** Aspekt der vorliegenden Erfindung - Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die erfindungsgemäßen Kompositpartikel enthalten.

Mit den erfindungsgemäßen Kompositpartikeln sind erstmals organischanorganisch basierte Hybridpartikel bzw. Kompositpartikel mit Kern/Hülle-Struktur aus einem wachsbasierten Kern und einem anorganischen Hüllmaterial bereitgestellt worden, welche bei ihrer Inkorporierung in die vorgenannten Systeme zu einer deutlichen Leistungssteigerung, insbesondere zu einer signifikanten Verbesserung der mechanischen Eigenschaften, insbesondere der Verschleißbeständigkeit, vorzugsweise der Kratzfestigkeit und/oder Abriebfestigkeit, führen.

Im Vergleich zu mineralischen Füllstoffpartikeln des Standes der Technik, welche aus dem mineralischen Material in Masse bestehen, weisen die erfindungsgemäßen Kompositpartikel deutlich geringere Dichten bzw. Eigengewichte auf. Dies führt dazu, daß zur Erzielung vergleichbarer Eigenschaften bzw. Effekte deutlich geringere Gewichtsmengen an den erfindungsgemäßen Kompositpartikeln im Vergleich zu reinen mineralischen Füllstoffpartikeln eingesetzt werden müssen, da die mechanischen Eigenschaften der betreffenden Systeme durch den Volumenanteil der Füllstoffpartikel bestimmt werden. Dies führt neben einer erheblichen Kostenersparnis auch zu leistungsstärkeren Dispersionen, welche in ihrer Handhabung infolge des verringerten Füllstoffgehalts verbessert sind.

Zudem haben rein anorganische Füllstoffpartikel des Standes der Technik den Nachteil, daß sie hohe Brechungsindizes im Vergleich zu einem reinen Bindemittel aufweisen, so daß ihre Inkorporierung in die betreffenden Bindemittel zu einer gewissen Eintrübung bzw. Glanzreduktion führen. Dieses Phänomen wird bei den erfindungsgemäßen Kompositpartikeln nicht beobachtet, d. h. ihre Inkorporierung in die betreffenden Bindemittelsysteme führt zu keiner signifikanten Eintrübung, da im Vergleich zu herkömmlichen mineralischen Füllstoffpartikeln aus den vorgenannten Gründen deutlich geringere Mengen an den erfindungsgemäßen Kompositpartikeln benötigt werden.

Auch lassen sich die erfindungsgemäßen Füllstoffpartikel ohne weiteres in die betreffenden Systeme stabil, insbesondere langzeitstabil und phasenstabil, einarbeiten, ohne daß es zu einer signifikanten Entmischung oder aber etwa Anreicherung an der Oberfläche kommt. Hierdurch wird die Leistungssteigerung homogen über das gesamte System erreicht.

Die erfindungsgemäßen Kompositpartikel und die erfindungsgemäßen Dispersionen sind ausgesprochen breit anwendbar. Die breite Anwendbarkeit in Kombination mit der außerordentlich guten Effizienz der erfindungsgemäßen Kompositpartikel und der erfindungsgemäßen Dispersionen übertreffen Partikel und Dispersionen des Standes der Technik bei weitem.

Die Anwendung der erfindungsgemäßen Kompositpartikel und Dispersionen kann beispielsweise durch Zugabe in bestehende Systeme, welche z. B. zu Lacken, Klebestoffen, Kunststoffen etc. weiterverarbeitet werden, erfolgen. Durch die Zugabe bereits kleiner Mengen der erfindungsgemäßen Kompositpartikel bzw. der erfindungsgemäßen Dispersionen wird eine außerordentlich erhöhte mechanische Beständigkeit erzielt. Überraschenderweise werden die übrigen Verarbeitungseigenschaften der betreffenden Systeme, insbesondere Lacke, Kunststoffe etc., nicht bzw. nicht signifikant beeinflußt, so daß keine neue Optimierung der übrigen Parameter bei diesen Anwendungen zu erfolgen hat.

Die erfindungsgemäßen Kompositpartikel und ihre Dispersionen eigenen sich daher in hervorragender Weise für den Einsatz in Beschichtungsmaterialien aller Art, Kunststoffen, Klebstoffen, Dichtungsmassen etc.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Beispiel 1: Herstellung anorganisch-organischer Kompositpartikel mit

### Kern/Hülle-Struktur aus Wachskern und SiO₂-Hülle

Als Ausgangsmaterial wurde eine Dispersion eines Wachses auf Basis eines Polymethylalkylsilikons mit Polyethergruppen und Vinyltriethoxysilan (VTEO) (hydrol.) als Seitenketten gewählt (Addukt aus Silikonwachs + Allyl-EO + C₁₈-Olefin + VTEO). Die wäßrige Emulsion wurde mit Methoxypropanol im Verhältnis Wachsemulsion/Methoxypropanol von 4 : 1 verdünnt und mit Wasser auf einen Festkörperanteil von 22 % eingestellt.

100 g dieser Mischung wurden auf 40 °C erwärmt und unter starkem Rühren über einen Zeitraum von 8 Stunden mit 94,0 g TEOS (Tetraethoxysilan) versetzt. Zur Nachreaktion wurde das Reaktionsgemisch für weitere zwei Stunden bei 40 °C gerührt.

Der Partikelgehalt nach diesem Reaktionsschritt betrug 30,7 Gew.-%. Es resultierte eine Dispersion anorganisch-organischer Kompositpartikel mit Kern/- Hülle-Struktur aus Wachskern und SiO₂-Hülle.

### Beispiel 2: Oberflächenmodifizierung mittels Polysiloxanen

Die Funktionalisierung der Partikel aus Beispiel 1 sowie die Überführung in ein organisches Lösemittel erfolgte nach folgender Vorschrift:

60 g der Partikeldispersion aus Beispiel 1 wurden mit 70 g Methoxypropanol verdünnt und mit 1 g Ammoniaklösung (25%ig) auf einen pH-Wert > 8 eingestellt. Anschließend wurde auf 70 °C erhitzt und wurden 10 mmol Propyltrimethoxysilan zugegeben und für zwei Stunden gerührt. Danach wurden 80 g Methoxypropylacetat zugegeben und anschließend 63 g Lösemittelgemisch im Vakuum (75 °C) abgezogen. Im Anschluß wurde durch Zugabe von 1,22 g eines Silikons (Mₙ = 1.000 g/mol)) mit Trimethoxysilyl-Ankergruppen unter zweistündigem Rühren die Oberfläche der in Beispiel 1 hergestellten Partikel funktionalisiert. Zur Erhöhung der Stabilität der Dispersion und der Verträglichkeit in unterschiedlichen Bindemitteln kann gegebenenfalls ein Dispergierhilfsmittel zugegeben werden. Durch Destillation wurde der Partikelgehalt der Dispersion auf 17 Gew.-% eingestellt.

### Beispiel 3: Anwendungsversuche

Das Produkt aus Beispiel 2 wurde einem UV-härtenden Klarlack zugegeben und auf Kratzbeständigkeit geprüft. Dazu wurde im Klarlack ein Partikelgehalt von 1 Gew.-% eingestellt, unter Standardbedingungen ausgehärtet und zur Bestimmung der Kratzfestigkeit unter anderem ein Crockmetertest durchgeführt. Gleiches wurde mit reinen, nicht erfindungsgemäßen SiO₂-Partikeln in Masse durchgerührt.

Der Crockmeter-Test wurde wie folgt durchgeführt: Platten wurden mit den entsprechenden füllstoffhaltigen Lacken beschichtet, und die beschichteten Platten wurden mit einem Crockmeter-Gerät (Typ CM-5, ATLAS) auf Verkratzungsbeständigkeit geprüft. Dazu wurden die beschichteten Platten mit einem Poliertuch der Firma 3M (3M-Polierpapier (*polishing paper*), Feinheitsgrad: 9 µm) reproduzierbar beansprucht (10 Doppelhübe, Auflagekraft 9 Newton). Die Bewertung der Verkratzungsbeständigkeit erfolgte durch Messung des Glanzes der beanspruchten Stelle im Vergleich zum Glanz einer nicht beanspruchten Stelle auf der Prüfplatte. Der Glanz wurde mit einem Meßgerät vom Typ micro-TRI-Gloss-Gerät der Fa. BYK-GARDNER unter einem Beobachtungswinkel von 20° bestimmt. Die Ergebnisse sind in der nachfolgenden Tabelle wiedergegeben.

Die erhaltenen Ergebnisse sind wie folgt:

| Probe | Glanz vor Verkratzung / Glanzeinheiten (GE) | Glanz nach 10 Zyklen Crockmeter/ Glanzeinheiten (GE) |
|---|---|---|
| Kontrolle | 87 | 40 |
| 1 Gew.-% erfindungsgemäße Partikel aus Beispiel 2 | 87 | 70 |
| 1,5 Gew.-% erfindungsgemäße Partikel aus Beispiel 2 | 87 | 80 |
| 1 Gew.-% SiO₂Partikel (nicht erfindungsgemäß) | 79 | 46 |
| 2Gew.-%SiO₂- Partikel (nicht erfindungsgemäß) | 75 | 55 |
| 3 Gew.% SiO₂Partikel (nicht erfindungsgemäß) | 71 | 64 |

Die vorstehenden Ergebnisse zeigen, daß durch die Inkorporierung der erfindungsgemäßen Partikel die Verkratzungsbeständigkeit signifikant verbessert werden kann, wobei im Vergleich zu reinen SiO₂-Partikeln in Masse des Standes der Technik deutlich geringere Mengen benötigt werden, um diesen Effekt zu bewirken. Zudem führt die Inkorporierung der erfindungsgemäßen Partikel in den vorgenannten Mengen zu keinerlei nennenswerten Eintrübungen des Lacksystems, wohingegen im Fall der nicht erfindungsgemäßen Partikel eine deutliche Eintrübung bereits des ursprünglichen Lacksystems vor Verkratzungsbeanspruchtung resultiert.

Die vorstehenden Versuche belegen in eindrucksvoller Weise die gesteigerte Leistungsfähigkeit der erfindungsgemäßen Systeme bzw. Partikel.

## Patentansprüche

1. Anorganisch-organische Kompositpartikel mit Kern/Hülle-Struktur, wobei die Kompositpartikel einen organisch basierten Kern, welcher mindestens ein Wachs enthält, und eine diesen Kern umgebende anorganisch basierte Hülle aufweisen,
wobei das Wachs funktionelle Gruppen, welche mit dem anorganischen Material der Hülle durch Ausbildung physikalischer und/oder chemischer Bindungen in Wechselwirkung zu treten imstande sind, enthält, wobei die funktionellen Gruppen polare Gruppen sind, welche Heteroatome aus der Gruppe von O, N und/oder S enthalten.

2. Kompositpartikel nach Anspruch 1, **dadurch gekennzeichnet,**
**daß** die Kompositpartikel Teilchengrößen im Bereich von 1 bis 1.000 nm, insbesondere 5 bis 800 nm, vorzugsweise 10 bis 700 nm, weiter bevorzugt 20 bis 600 nm, besonders bevorzugt 50 bis 500 nm, aufweisen und/oder
**daß** der Wachs enthaltende Kern eine Größe im Bereich von 1 bis 400 nm, insbesondere 5 bis 300 nm, bevorzugt 10 bis 200 nm, aufweist.

3. Kompositpartikel nach einem der vorangehenden Ansprüche, **dadurch gekennzeichnet, daß** der Anteil an die Hülle bildendem anorganischem Material, bezogen auf die Kompositpartikel, 0,5 bis 80 Gew.-%, insbesondere 5 bis 75 Gew.-%, vorzugsweise 10 bis 70 Gew.-%, beträgt und/oder daß der Anteil an den Kern bildendem organischem Material, insbesondere Wachs, bezogen auf die Kompositpartikel, 99,5 bis 20 Gew.-%, insbesondere 95 bis 25 Gew.%, vorzugsweise 90 bis 30 Gew.-%, beträgt.

4. Kompositpartikel nach einem der vorangehenden Ansprüche, **dadurch gekennzeichnet, daß** die Hülle aus mindestens einem gegebenenfalls dotiertem Oxid, Hydroxid, Oxidhydroxid, Sulfat, Phosphat, Sulfid, Carbonat, Silikat mindestens eines Metalls oder Halbmetalls oder aber aus einem Metall oder aber aus Mischungen oder Kombinationen solcher Verbindungen gebildet ist oder diese Verbindung(en) enthält.

5. Kompositpartikel nach einem der vorangehenden Ansprüche, **dadurch gekennzeichnet, daß** die Hülle aus Aluminiumoxid, Siliziumdioxid, Ceroxid, Zinkoxid und/oder Titandioxid, bevorzugt Siliziumdioxid, Zinkoxid und/oder Titandioxid, besonders bevorzugt Siliziumdioxid, gebildet ist oder diese Verbindung(en) enthält.

6. Kompositpartikel nach einem der vorangehenden Ansprüche, **dadurch gekennzeichnet, daß** die Hülle zumindest im wesentlichen homogen und/oder mit zumindest im wesentlichen gleichmäßiger Schichtdicke auf den Kern aufgebracht ist, insbesondere als Präzipitat.

7. Kompositpartikel nach einem der vorangehenden Ansprüche, **dadurch gekennzeichnet, daß** der Kern aus mindestens einem Wachs gebildet ist oder dieses enthält, insbesondere wobei das Wachs ausgewählt ist aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen.

8. Kompositpartikel nach einem der vorangehenden Ansprüche, **dadurch gekennzeichnet, daß** die funktionellen Gruppen Hydroxylgruppen, Polyethergruppen, insbesondere Polyalkylenoxidgruppen, und/oder Carboxylgruppen, besonders bevorzugt Polyethergruppen und/oder Hydroxylgruppen sind.

9. Kompositpartikel nach einem der vorangehenden Ansprüche, **dadurch gekennzeichnet, daß** die anorganisch basierte Hülle oberflächenmodifiziert ist, insbesondere mittels Polysiloxangruppen.

10. Verfahren zur Herstellung von anorganisch-organischen Kompositpartikel mit Kern/Hülle-Struktur nach den vorangehenden Ansprüchen, **dadurch gekennzeichnet, daß** organisch basierte Teilchen, welche mindestens ein Wachs enthalten oder hieraus bestehen, mit einer anorganisch basierten Hülle beschichtet werden, so daß die organisch basierten Wachsteilchen von der anorganisch basierten Hülle umgeben werden,
wobei als den Kern bildendes Wachs ein Wachs eingesetzt wird, welches funktionelle Gruppen, die mit dem anorganischen Material der Hülle durch Ausbildung physikalischer und/oder chemischer Bindungen in Wechselwirkung zu treten imstande sind, enthält, wobei die funktionellen Gruppen polare Gruppen sind, welche Heteroatome aus der Gruppe von O, N und/oder S enthalten.

11. Verfahren nach einem der vorangehenden Ansprüche, **dadurch gekennzeichnet,**
**daß** zunächst eine Dispersion von Wachsteilchen bereitgestellt wird und die Wachsteilchen nachfolgend mit dem anorganisch basierten Hüllmaterial beschichtet werden, insbesondere das anorganisch basierte Hüllmaterial mittels Fällungsreaktion auf den Wachsteilchen abgeschieden wird, insbesondere nicht kovalent abgeschieden wird,
insbesondere wobei das anorganisch basierte Hüllmaterial in situ, insbesondere im Rahmen der Fällungsreaktion, gebildet wird und/oder
wobei das anorganisch basierte Hüllmaterial in situ, insbesondere im Rahmen der Fällungsreaktion, aus mindestens einem Kieselsäureester gebildet wird.

12. Verwendung von Kompositpartikeln nach den vorangehenden Ansprüchen als Füllstoffe.

13. Verwendung von Kompositpartikeln nach den vorangehenden Ansprüchen in Beschichtungsstoffen und Beschichtungssystemen, insbesondere Lacken und Farben, in Dispersionen aller Art, in Kunststoffen, in Schaumstoffen, in Kosmetika, insbesondere Nagellacken, in Klebstoffen und in Dichtungsmassen, insbesondere als Füllstoffe.

14. Dispersionen, enthaltend Kompositpartikel nach den vorangehenden Ansprüchen in einem Träger- oder Dispergiermedium.

15. Beschichtungsstoffe und Beschichtungssysteme, insbesondere Lacke und Farben, Kunststoffe, Schaumstoffe, Kosmetika, insbesondere Nagellacke, Klebstoffe und Dichtungsmassen, enthaltend Kompositpartikel nach den vorangehenden Ansprüchen.

## Claims

1. Inorganic-organic composite particles with core/shell structure, the composite particles having an organic-based core, which comprises at least one wax, and an inorganic-based shell surrounding said core,
the wax comprising functional groups which are capable of interacting with the inorganic material of the shell through formation of physical and/or chemical bonds, the functional groups being polar groups which contain heteroatoms from the group of O, N and/or S.

2. Composite particles according to Claim 1, **characterized**
**in that** the composite particles have particle sizes in the range from 1 to 1000 nm, in particular 5 to 800 nm, preferably 10 to 700 nm, more preferably 20 to 600 nm, very preferably 50 to 500 nm, and/or
**in that** the wax-comprising core has a size in the range from 1 to 400 nm, in particular 5 to 300 nm, preferably 10 to 200 nm.

3. Composite particles according to either of the preceding claims, **characterized in that** the fraction of shell-forming inorganic material, based on the composite particles, is 0.5 % to 80 % by weight, in particular 5 % to 75 % by weight, preferably 10 % to 70 % by weight, and/or **in that** the fraction of core-forming organic material, in particular wax, based on the composite particles is 99.5 % to 20 % by weight, in particular 95 % to 25 % by weight, preferably 90 % to 30 % by weight.

4. Composite particles according to any of the preceding claims, **characterized in that** the shell is formed of at least one optionally doped oxide, hydroxide, oxide hydroxide, sulfate, phosphate, sulfide, carbonate, silicate of at least one metal or semi-metal, or else of a metal or else of mixtures or combinations of such compounds, or comprises said compound(s).

5. Composite particles according to any of the preceding claims, **characterized in that** the shell is formed of aluminum oxide, silicon dioxide, cerium oxide, zinc oxide and/or titanium dioxide, preferably silicon dioxide, zinc oxide and/or titanium dioxide, more preferably silicon dioxide, or comprises said compound(s).

6. Composite particles according to any of the preceding claims, **characterized in that** the shell is applied on the core at least substantially homogeneously and/or with at least substantially uniform layer thickness, in particular as a precipitate.

7. Composite particles according to any of the preceding claims, **characterized in that** the core is formed of at least one wax or comprises said wax, in particular where the wax is selected from the group of (i) natural waxes, in particular plant, animal, and mineral waxes; (ii) chemically modified waxes; (iii) synthetic waxes; and also mixtures thereof.

8. Composite particles according to any of the preceding claims, **characterized in that** the functional groups are hydroxyl groups, polyether groups, in particular polyalkylene oxide groups, and/or carboxyl groups, very preferably polyether groups and/or hydroxyl groups.

9. Composite particles according to any of the preceding claims, **characterized in that** the inorganic-based shell is surface-modified, in particular by means of polysiloxane groups.

10. Process for preparing inorganic-organic composite particles with core/shell structure according to the preceding claims, **characterized in that** organic-based particles which comprise or consist of at least one wax are coated with an inorganic-based shell, and so the organic-based wax particles are surrounded by the inorganic-based shell,
where core-forming wax used is a wax which comprises functional groups which are capable of interacting with the inorganic material of the shell by forming physical and/or chemical bonds, where the functional groups are polar groups which contain heteroatoms from the group of O, N and/or S.

11. Process according to any of the preceding claims, **characterized**
**in that** first a dispersion of wax particles is provided and the wax particles are subsequently coated with the inorganic-based shell material, in particular the inorganic-based shell material is deposited, in particular not covalently deposited, onto the wax particles by means of precipitation reaction, in particular where the inorganic-based shell material is formed in situ, in particular as part of the precipitation reaction, and/or
where the inorganic-based shell material is formed in situ, in particular as part of the precipitation reaction, from at least one silicic ester.

12. Use of composite particles according to the preceding claims as fillers.

13. Use of composite particles according to the preceding claims in coating materials and coating systems, in particular paints and inks, in dispersions of all kinds, in plastics, in foams, in cosmetics, in particular nail varnishes, in adhesives, and in sealants, in particular as fillers.

14. Dispersions comprising composite particles according to the preceding claims in a carrier medium or dispersion medium.

15. Coating materials and coating systems, in particular paints and inks, plastics, foams, cosmetics, in particular nail varnishes, adhesives, and sealants, comprising composite particles according to the preceding claims.

## Revendications

1. Particules composites inorganiques-organiques présentant une structure noyau/enveloppe, les particules composites présentant un noyau à base organique qui contient au moins une cire et une enveloppe à base inorganique entourant ce noyau,
la cire contenant des groupes fonctionnels qui sont en mesure d'entrer en interaction avec le matériau inorganique de l'enveloppe en formant des liaisons physiques et/ou chimiques, les groupes fonctionnels étant des groupes polaires qui contiennent des hétéroatomes du groupe formé par O, N et/ou S.

2. Particules composites selon la revendication 1, **caractérisées**
**en ce que** les particules composites présentent des grosseurs de particules dans la plage de 1 à 1000 nm, en particulier de 5 à 800 nm, de préférence de 10 à 700 nm, plus préférablement de 20 à 600 nm, de manière particulièrement préférée de 50 à 500 nm, et/ou
**en ce que** le noyau contenant la cire présente une grosseur dans la plage de 1 à 400 nm, en particulier de 5 à 300 nm, de préférence de 10 à 200 nm.

3. Particules composites selon l'une quelconque des revendications précédentes, **caractérisées en ce que** la proportion de matériau inorganique formant l'enveloppe, par rapport aux particules composites, représente 0,5 à 80 % en poids, en particulier 5 à 75 % en poids, de préférence 10 à 70 % en poids et/ou **en ce que** la proportion de matériau organique formant le noyau, en particulier la cire, par rapport aux particules composites, représente 99,5 à 20 % en poids, en particulier 95 à 25 % en poids, de préférence 90 à 30 % en poids.

4. Particules composites selon l'une quelconque des revendications précédentes, **caractérisées en ce que** l'enveloppe est formée à partir d'au moins un oxyde, hydroxyde, oxyde-hydroxyde, sulfate, phosphate, sulfure, carbonate, silicate, le cas échéant dopé, d'au moins un métal ou semi-métal ou encore à partir d'un métal ou encore à partir de mélanges ou de combinaisons de ces composés ou contient ce ou ces composé(s).

5. Particules composites selon l'une quelconque des revendications précédentes, **caractérisées en ce que** l'enveloppe est formée à partir d'oxyde d'aluminium, de dioxyde de silicium, d'oxyde de cérium, d'oxyde de zinc et/ou de dioxyde de titane, de préférence de dioxyde de silicium, d'oxyde de zinc et/ou de dioxyde de titane, de manière particulièrement préférée de dioxyde de silicium ou contient ce ou ces composé(s).

6. Particules composites selon l'une quelconque des revendications précédentes, **caractérisées en ce que** l'enveloppe est appliquée sur le noyau au moins de manière essentiellement homogène et/ou en une épaisseur de couche au moins essentiellement régulière, en particulier comme précipité.

7. Particules composites selon l'une quelconque des revendications précédentes, **caractérisées en ce que** le noyau est formé par au moins une cire ou contient celle-ci, la cire étant en particulier choisie dans le groupe formé par (i) les cires naturelles, en particulier les cires végétales, animales et minérales ; (ii) les cires chimiquement modifiées ; (iii) les cires synthétiques ; ainsi que leurs mélanges.

8. Particules composites selon l'une quelconque des revendications précédentes, **caractérisées en ce que** les groupes fonctionnels sont des groupes hydroxyle, polyéther, en particulier des groupes poly(oxyde d'alkylène) et/ou des groupes carboxyle, de manière particulièrement préférée des groupes polyéther et/ou des groupes hydroxyle.

9. Particules composites selon l'une quelconque des revendications précédentes, **caractérisées en ce que** l'enveloppe à base inorganique est modifiée en surface, en particulier au moyen de groupes polysiloxane.

10. Procédé pour la préparation de particules composites inorganiques-organiques présentant une structure noyau-enveloppe selon les revendications précédentes, **caractérisé en ce que** les particules à base organique, qui contiennent au moins une cire ou qui sont constituées par celle-ci, sont revêtues par une enveloppe à base inorganique, de manière telle que les particules de cire à base organique sont entourées par l'enveloppe à base inorganique,
en utilisant comme cire formant le noyau une cire contenant des groupes fonctionnels qui sont en mesure d'entrer en interaction avec le matériau inorganique de l'enveloppe en formant des liaisons physiques et/ou chimiques, les groupes fonctionnels étant des groupes polaires qui contiennent des hétéroatomes du groupe formé par O, N et/ou S.

11. Procédé selon l'une quelconque des revendications précédentes, **caractérisé en ce qu'**on met d'abord à disposition une dispersion de particules de cire et les particules de cire sont ensuite revêtues par le matériau d'enveloppe à base inorganique, le matériau d'enveloppe à base inorganique étant en particulier déposé par une réaction de précipitation sur les particules de cire, en particulier de manière non covalente,
le matériau d'enveloppe à base inorganique étant en particulier formé in si-tu, en particulier dans le cadre de la réaction de précipitation et/ou
le matériau d'enveloppe à base inorganique étant formé in situ, en particulier dans le cadre de la réaction de précipitation, à partir d'au moins un ester de silice.

12. Utilisation de particules composites selon les revendications précédentes comme charges.

13. Utilisation de particules composites selon les revendications précédentes dans des substances de revêtement et des systèmes de revêtement, en particulier des laques et des encres, dans des dispersions de tous types, dans des matériaux synthétiques, dans des mousses, dans des cosmétiques, en particulier des vernis à ongles, dans des adhésifs et dans des masses d'étanchéité, en particulier comme charges.

14. Dispersions contenant les particules composites selon les revendications précédentes dans un milieu support ou de dispersion.

15. Substances de revêtement et systèmes de revêtement, en particulier laques et encres, matériaux synthétiques, mousses, cosmétiques, en particulier vernis à ongles, adhésifs et masses d'étanchéité, contenant des particules composites selon les revendications précédentes.
